(19) Europäisches Patentamt European Patent Office Office européen des brevets

(11) **EP 1 388 727 B1**

(12) **EUROPEAN PATENT SPECIFICATION**

(45) Date of publication and mention
of the grant of the patent:
**03.10.2007 Bulletin 2007/40**

(51) Int Cl.:
***G01C 17/38*** *(2006.01)*

(21) Application number: **03254835.6**

(22) Date of filing: **01.08.2003**

(54) **Apparatus and method for calculating azimuth angle**

Vorrichtung und Verfahren zur Azimutwinkelberechnung

Dispositif et procédé pour calculer un angle d'azimut

(84) Designated Contracting States:
**DE FI FR GB SE**

(30) Priority: **06.08.2002 KR 2002046366**

(43) Date of publication of application:
**11.02.2004 Bulletin 2004/07**

(73) Proprietors:
• **Park, Chan-Gook**
**Songpa-gu,**
**Seoul (KR)**
• **SAMSUNG ELECTRONICS CO., LTD.**
**Suwon-city,**
**Gyunggi-do (KR)**

(72) Inventors:
• **Choi, Sang-on**
**Suwon-city**
**Gyunggi-do (KR)**
• **Cho, Woo-jong**
**Suwon-city**
**Gyunggi-do (KR)**

• **Lee, Woo-jong**
**Suwon-city**
**Gyunggi-do (KR)**
• **Park, Chan-gook**
**Songpa-gu**
**Seoul (KR)**
• **Cho, Seong-yun**
**Songpa-gu**
**Seoul (KR)**

(74) Representative: **Ertl, Nicholas Justin**
**Elkington and Fife LLP,**
**Prospect House,**
**8 Pembroke Road**
**Sevenoaks,**
**Kent TN13 1XR (GB)**

(56) References cited:
**US-A- 4 414 753**      **US-A- 5 786 849**
**US-A1- 2002 092 188**

## Description

The present invention relates to a measurement apparatus and calculation method which can calculate accurate azimuth information.

Up to now, there have been efforts to provide a method and apparatus for calculating azimuth information of a vehicle or a sensor module which moves in free space using an earth magnetic sensor such as a fluxgate. However, since the fluxgate is expensive and large-sized, it has been used only for navigation.

Recently, small-sized and low cost earth magnetic sensor modules have been developed, and especially, with the development of MEMS technology, chip type earth magnetic sensor modules have been developed and used in diverse fields which require azimuth information. However, in the application fields where the earth magnetic sensor module cannot be leveled, accurate azimuth information cannot be obtained only through the earth magnetic sensor.

Generally, the earth magnetic sensor is a device for measuring the strength of the earth magnetic field, and it can measure the strength of the magnetic field accurately only in the case that a flux vector of the earth magnetic field is parallel to a vector of a measurement axis of the sensor for measuring the flux vector. In this case, when a two-axis earth magnetic sensor in which each axis is orothogonally arranged with a right-hand rule, is horizontally mounted to form a sensor module, the azimuth angle indicated by the sensor module is calculated using outputs of the two sensors.

However, if the earth magnetic sensor module cannot be leveled, the strength of the earth magnetic field cannot accurately be measured, and the azimuth information at this time may include a great error. Consequently, the error according to an attitude should be compensated for, and for this, an error compensation through a coordinate conversion is performed using a three-axis earth magnetic sensor and an inclinometer for measuring the attitude.

With the development of a small-sized earth magnetic sensor, the attitude error compensation technique expands its application fields to sports, multimedia, game machine, etc.

However, in the case of using the two-axis earth magnetic sensor due to the problems of a sensor installation space, the error cannot be compensated for only through the developed error compensation technique, and thus the azimuth angle calculated increases in error according to the size of the attitude.

US 4,414,753 discloses a process for compensating the magnetic disturbances influencing the measurements of a device for determining the magnetic heading of a vehicle. The device of US753 comprises a two-axis magnetometer and a two-axis inclinometer. The inclinometer readings are used to compensate the magnetic heading calculations for small roll and pitch angles.

According to the invention, there is provided an apparatus for calculating an azimuth angle, comprising:

a two-axis earth magnetic sensor for generating first and second perpendicular-axis magnetic data; and
a two-axis inclinometer for calculating a roll angle $\phi$ and a pitch angle $\theta$;

wherein the apparatus further comprises:

means for generating virtual Z-axis magnetic data using the first and second perpendicular-axis magnetic data and the roll and pitch angles, such that three-axis earth magnetic data comprises the two-axis earth magnetic sensor data plus the one-axis calculated virtual Z-axis magnetic data;
means for performing coordinate conversion of the first and second perpendicular-axis magnetic data and the virtual Z-axis magnetic data into a horizontal coordinate system; and
means for calculating azimuth from the co-ordinate converted values of the first and second perpendicular-axis magnetic data.

The invention can thus compensate for an attitude error of an earth magnetic sensor using information on an earth magnetic field obtained from a two-axis earth magnetic sensor and an inclinometer. Accurate azimuth information can then be obtained.

The invention also provides a method of calculating an azimuth angle, comprising:

generating first and second perpendicular-axis magnetic data; and
obtaining inclinometer data comprising a roll angle $\phi$ and a pitch angle $\theta$,

wherein the method further comprises:

generating virtual Z-axis earth magnetic data using the first and second perpendicular-axis magnetic data and the roll and pitch angles, thereby to derive three-axis earth magnetic data comprising the two-axis earth magnetic sensor data plus the one-axis calculated virtual Z-axis magnetic data;
performing coordinate conversion of the three-axis earth magnetic data into a horizontal coordinate system; and

calculating the azimuth angle using the co-ordinate converted values of the first and second perpendicular-axis magnetic data.

The apparatus and method of the invention enables accurate azimuth information to be calculated by compensating for an attitude error of a two-axis earth magnetic sensor. In the case that the two-axis earth magnetic sensor is mounted on a device which requires the azimuth information (for example, a navigation system, game machine, PDA, cellular phone, etc.), the apparatus and method according to the present invention can calculate the attitude information using a two-axis inclinometer, and then compensates for the error according to the attitude of the earth magnetic sensor to obtain the accurate azimuth information.

An algorithm for obtaining the coordinate conversion matrix for converting the earth magnetic sensor data into the horizontal coordinate system may comprise converting a unit of the inclinometer data stored in the internal register of the microprocessor into an SI unit by multiplying the inclinometer data by a scale factor, calculating an attitude using the converted inclinometer data, and calculating the coordinate conversion matrix using the calculated attitude value.

An algorithm for generating the virtual Z-axis earth magnetic data in the case of using the two-axis earth magnetic sensor may comprise setting earth magnetic data measured when the earth magnetic sensor points to a vertically downward direction of the earth, and generating the virtual Z-axis earth magnetic data using the calculated attitude information and the X-axis and Y-axis earth magnetic data.

Preferred embodiments of the invention will now be described in detail with reference to the attached drawings in which:

FIG. 1 is a view illustrating a method of calculating an azimuth angle by compensating for an attitude error by a two-axis earth magnetic sensor according to the present invention;

FIG. 2 is a view illustrating the construction of a two-axis earth magnetic sensor and an attitude error compensation apparatus according to the present invention;

FIG. 3 is a flowchart illustrating the operation of the microprocessor mounted on the two-axis earth magnetic sensor and an attitude error compensation apparatus according to the present invention;

FIG. 4 is a graph illustrating the experimental result of the attitude calculated using the inclinometer according to the present invention;

FIG 5 is a graph illustrating the experimental result of the virtual Z-axis earth magnetic data calculated using the two-axis earth magnetic sensor and the inclinometer; and

FIG. 6 is a graph illustrating the experimental result of the azimuth angle calculated using the two-axis earth magnetic sensor and the inclinometer.

An apparatus and method of calculating an azimuth angle according to preferred embodiments of the present invention will now be described in detail with reference to the annexed drawings in which like reference numerals refer to like elements.

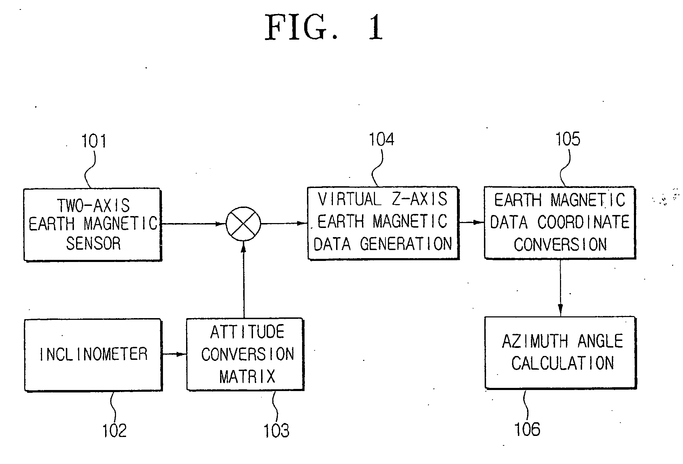

FIG. 1 is a view illustrating a method of calculating an azimuth angle by compensating for an attitude error by a two-axis earth magnetic sensor according to the present invention. The method includes a two-axis earth magnetic sensor 101, an inclinometer 102, an attitude (e.g., coordinate) conversion matrix 103, a virtual Z-axis earth magnetic data generation 104, an earth magnetic data coordinate conversion 105, and an azimuth angle calculation 106.

The earth magnetic sensor 101, which may be a fluxgate sensor or a magnetoresistive (MR), measures the strength of the earth magnetic field, and comprises a two-axis earth magnetic sensor having an X-axis in the forward direction of the sensor module and Y-axis in the rightward direction from the X-axis at an angle of 90°.

The inclinometer 102 measures a tilt angle of the sensor 101 with respect to the earth surface, and an accelerometer may be used as the inclinometer. In the case that the accelerometer, which measures only the acceleration of gravity at a standstill, is used as the inclinometer, the attitude information can be calculated by measuring the accelerations of different levels according to the attitude using the two-axis or three-axis module arranged at right angles. In the case of using the two-axis accelerometer, the acceleration is measured through Equations 1a and 1b and the attitude is calculated using Equations 2a and 2b.

$$a_x = g \cdot \sin \theta \tag{1a}$$

$$a_y = g \cdot \sin \phi \tag{1b}$$

$$\phi = \sin^{-1}(a_y / g) \qquad (2a)$$

$$\theta = \sin^{-1}(a_x / g) \qquad (2b)$$

Here, $a_x$ and $a_y$ are output values of the X-axis and Y-axis accelerometer, $g$ is the acceleration of gravity, and $\phi$ and $\theta$ are a roll and a pitch angle, respectively.

The coordinate conversion matrix 103 is for converting the earth magnetic sensor data into the horizontal coordinate system, and is constructed as follows using the attitude information calculated using the output value of the inclinometer 102.

$$C_b^h = \begin{bmatrix} \cos\theta & \sin\theta\sin\phi & \sin\theta\cos\phi \\ 0 & \cos\phi & -\sin\phi \\ -\sin\theta & \cos\theta\sin\phi & \cos\theta\cos\phi \end{bmatrix} \qquad (3)$$

The virtual Z-axis earth magnetic data 104 is for the attitude error compensation of the two-axis earth magnetic sensor, and is calculated as follows using the two outputs of the earth magnetic sensor and the attitude information as calculated above.

$$Z_{jg} = \frac{Z_h + X_{jg}\sin\theta - Y_{jg}\sin\phi\cos\theta}{\cos\phi\cos\theta} \qquad (4)$$

Here, $Z_h$ is the strength of the earth magnetic field first measured by experiment when a measurement axis of the earth magnetic sensor points to a vertically downward direction of the earth.

The coordinate conversion 105 of the earth magnetic sensor data to the horizontal coordinate system is performed as follows.

$$\begin{bmatrix} X_h \\ Y_h \\ Z_h \end{bmatrix} = C_b^h \begin{bmatrix} X_{jg} \\ Y_{jg} \\ Z_{jg} \end{bmatrix} \qquad (5)$$

Here, $[X_{jg}\ Y_{jg}\ Z_{jg}]^T$ is the earth magnetic sensor data.

The azimuth calculation 106 is performed as follows using the earth magnetic data the coordinate of which is converted into the horizontal coordinate system.

$$\phi = \tan^{-1}(Y_h / X_h) \qquad (6)$$

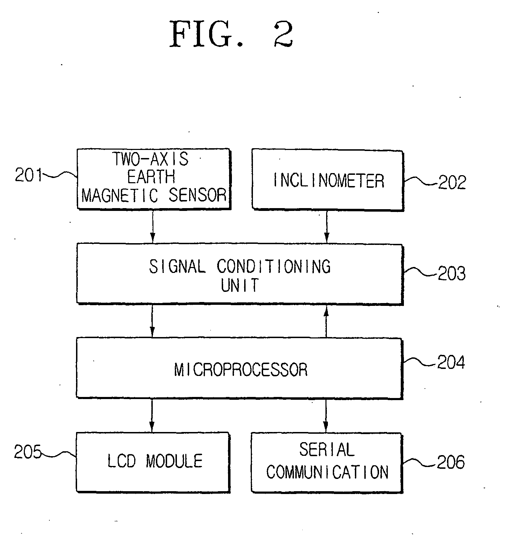

FIG. 2 is a view illustrating the construction of an interface for a two-axis earth magnetic sensor constructed to perform the function of FIG. 1. The interface includes a two-axis earth magnetic sensor 201, an inclinometer 202, a signal conditioning unit 203, a microprocessor 204, an LCD module 205, and a serial communication interface 206.

The signal conditioning unit 203 comprises a low-pass filter for removing a power supply noise and a high-frequency noise, and an analog-to-digital (A/D) converter for converting the analog sensor signal into a digital value. The signal conditioning unit 203 is necessary to process the sensor signal before it is inputted to the microprocessor 204.

The microprocessor 204 comprises a register for storing the sensor signal outputted from the A/D converter 203, an ALU (Arithmetic Logic Unit) and an FPU (Floating Point Unit) for compensating for the attitude error of the earth magnetic sensor and calculating the azimuth information, and an internal timer for setting an output period for transmitting the sensor data and the calculated azimuth information to the LCD module and the external device.

The LCD module 205 displays the azimuth information outputted from the microprocessor 204, so that the user can recognize the azimuth angle of the device having the earth magnetic sensor module mounted thereon.

The serial communication interface 206 is for transmitting the sensor data and the azimuth information outputted from the microprocessor 204 to the external device, and it may adopt asynchronous serial communication or synchronous serial communication type.

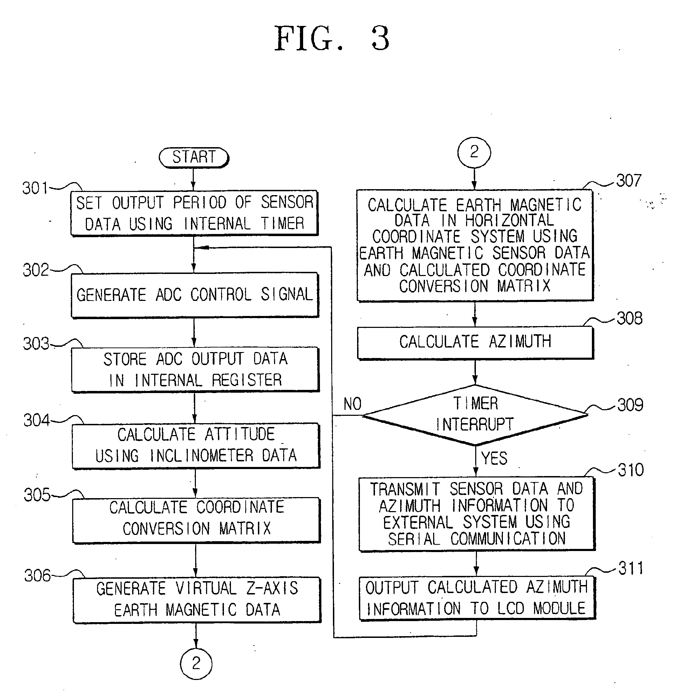

FIG. 3 is a flowchart illustrating the operation of the microprocessor mounted on the two-axis earth magnetic sensor and an attitude error compensation apparatus according to the present invention.

First, in order to transmit the output values of the two-axis earth magnetic sensor 201 and the inclinometer 202 and the finally calculated azimuth information to the external system, the data output period is set using the internal timer mounted on the microcomputer 204 (step 301).

In order to convert the output values of the earth magnetic sensor 201 and the inclinometer 202 into digital values, an A/D converter control signal is produced (step 302), and then the converted sensor data is stored in the internal register (step 303).

The attitude of the sensor module is calculated through Equations 2a and 2b using the" inclinometer data among the stored sensor data (step 304). Using this calculated attitude, the coordinate conversion matrix is calculated through Equation 3 (step 305).

The virtual Z-axis earth magnetic data is generated through Equation 4 using the calculated attitude and the earth magnetic sensor data stored in the internal register (step 306).

The three-axis earth magnetic data (i.e., two-axis earth magnetic sensor data + one-axis calculated virtual Z-axis earth magnetic data) is converted into the strength of the earth magnetic field in the horizontal coordinate system through Equation 5 using the calculated coordinate conversion matrix (step 307). Using this converted data, the azimuth angle is calculated through Equation 6 (step 308).

It is searched whether an interrupt is generated by the data output period set in the internal timer (step 309).

If it is searched that the timer interrupt is not generated, the present step returns to the previous step 302 of converting the sensor data into the digital value to repeat the performing of the step 302. Meanwhile, if it is searched that the timer interrupt is generated (step 309), the azimuth information calculated as above and the sensor data are transmitted to the external system using the serial communication (step 310), and outputted to the LCD module for display (step 311). After that, the operation returns to the step 302 of converting sensor data into digital value and repeats the steps thereafter until the next timer interrupt is generated.

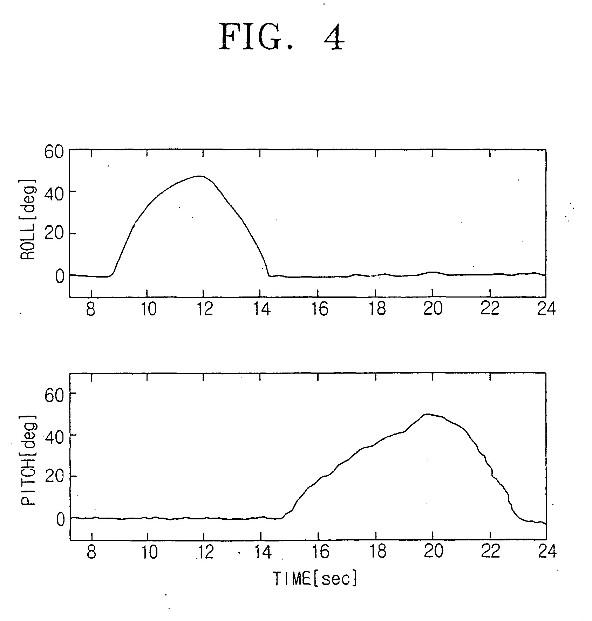

FIG. 4 is a graph illustrating the experimental result of the attitude calculated through Equation 2 using the inclinometer 202 according to the present invention.

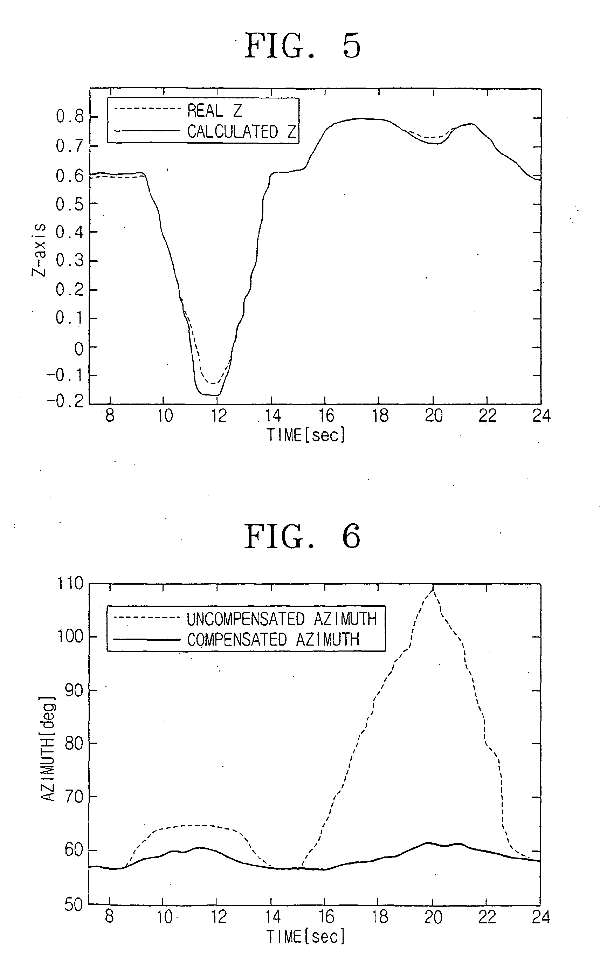

FIG. 5 is a graph illustrating the experimental result of the virtual Z-axis earth magnetic data calculated through Equation 4 in comparison to the Z-axis of the three-axis earth magnetic sensor. In FIG. 5, the dotted line represents the Z-axis of the three-axis earth magnetic sensor, and the solid line represents the virtual Z-axis earth magnetic data calculated through Equation 4. It can be recognized that the Z-axis earth magnetic data, which varies according to the change of the attitude, is accurately generated through Equation 4.

FIG. 6 is a graph illustrating the experimental result of the azimuth angle calculated through Equations 5 and 6 using the generated virtual Z-axis earth magnetic data, the output of the two-axis earth magnetic sensor, and the calculated coordinate conversion matrix in the case that the attitude is changed. The dotted line represents the uncompensated azimuth angle, which shows a great change of the azimuth angle, while the solid line represents the compensated azimuth angle, which shows that the azimuth angle is changed only within an error range where the change of the azimuth angle is small.

According to the apparatus for calculating the azimuth angle by the attitude error compensation of the earth magnetic sensor according to the present invention, the azimuth information is provided to the user using a two-axis earth magnetic sensor and a two-axis inclinometer, and overcoming the technical limit of the two-axis earth magnetic sensor module. This avoids the need for existing three-axis earth magnetic sensors with the inclinometer,

The present invention can be conveniently used in any situation when the azimuth information is required. For example, when it is intended to confirm the user's heading direction using an electronic map stored in a PDA, the present accurate azimuth angle of the user is recognized and the map is rotated accordingly to be displayed on the LCD of the PDA, so that the user can conveniently determine his/her own heading direction.

Also, the present invention facilitates the implementation of the three dimensional game through the information on the rotating direction of the game machine in addition to the attitude of the game machine, and further it can used as the data input device of the virtual reality.

While the present invention has been described in detail, it should be understood that various changes, substitutions and alterations can be made hereto without departing from the scope of the invention as defined by the appended claims.

**Claims**

1. An apparatus for calculating an azimuth angle, comprising:

  a two-axis earth magnetic sensor (101) for generating first and second perpendicular-axis earth magnetic sensor data; and
  a two-axis inclinometer (102) for calculating a roll angle $\phi$ and a pitch angle $\theta$;

  **characterised in that** the apparatus further comprises:

  means (104) for generating virtual Z-axis earth magnetic data using the first and second perpendicular-axis earth magnetic sensor data and the roll and pitch angles and the strength of the earth magnetic field $Z_h$, such that three-axis earth magnetic data comprises the two-axis earth magnetic sensor data plus the one-axis calculated virtual Z-axis earth magnetic data;
  means (105) for performing coordinate conversion of the first and second perpendicular-axis earth magnetic sensor data and the virtual Z-axis earth magnetic data into a horizontal coordinate system; and
  means (106) for calculating azimuth from the co-ordinate converted values of the first and second perpendicular-axis magnetic data.

2. An apparatus as claimed in claim 1, wherein performing coordinate conversion comprises using the coordinate conversion matrix or equivalent thereof:

$$C_b^h = \begin{bmatrix} \cos\theta & \sin\theta\sin\phi & \sin\theta\cos\phi \\ 0 & \cos\phi & -\sin\phi \\ -\sin\theta & \cos\theta\sin\phi & \cos\theta\cos\phi \end{bmatrix}.$$

.

3. An apparatus as claimed in claim 1 or 2, wherein the two-axis earth magnetic sensor (101) is for mounting on a device which requires azimuth information, for measuring a strength of an earth magnetic field according to the azimuth information if the device moves,
  wherein the apparatus further comprises an analog-to-digital (A/D) converter (203) for converting the magnetic sensor data into digital values,
  wherein the means for calculating comprises a microprocessor (204), and
  wherein the apparatus further comprises a serial communication interface (206) for transmitting the data processed by the microprocessor and an LCD (205) module for displaying the azimuth information calculated by the microprocessor.

4. A method of calculating an azimuth angle, comprising:

  generating first and second perpendicular-axis earth magnetic sensor data; and (304) obtaining inclinometer data comprising a roll angle $\phi$ and a pitch angle $\theta$,

  **characterised in that** the method further comprises:

  (306) generating virtual Z-axis earth magnetic data using the first and second perpendicular-axis earth magnetic sensor data and the roll and pitch angles and the strength of the earth magnetic field $Z_h$ thereby to derive three-axis earth magnetic data comprising the two-axis earth magnetic sensor data plus the one-axis calculated virtual Z-axis earth magnetic data;
  (307) performing coordinate conversion of the three-axis earth magnetic data into a horizontal coordinate system; and
  (308) calculating the azimuth angle using the co-ordinate converted values of the first and second perpendicular-axis earth magnetic sensor data.

5. The method as claimed in claim 4, wherein the method further comprises obtaining a coordinate conversion matrix, the coordinate conversion matrix comprising

$$C_b^h = \begin{bmatrix} \cos\theta & \sin\theta\sin\phi & \sin\theta\cos\phi \\ 0 & \cos\phi & -\sin\phi \\ -\sin\theta & \cos\theta\sin\phi & \cos\theta\cos\phi \end{bmatrix}$$

or equivalent thereof, and wherein performing coordinate conversion comprises using the coordinate conversion matrix or equivalent thereof.

6. The method of claim 4 or 5, wherein an algorithm for generating the virtual Z-axis earth magnetic data comprises:

a first step of measuring by experiment a strength of an earth magnetic field measured when a measurement axis of the earth magnetic sensor points to a vertically downward direction of the earth;
a second step of calculating the attitude using an output of the inclinometer;
a third step of measuring the strength of the earth magnetic field sensed in X-axis and Y-axis directions of a sensor module using the two-axis earth magnetic sensor; and
a fourth step of generating the virtual Z-axis earth magnetic data using the calculated attitude and an output value of the two-axis earth magnetic sensor.

7. The method of claim 4, 5 or 6, further comprising the steps of:

(301) setting a data output period using an internal timer mounted on a microcomputer;
(302) converting generated perpendicular-axis earth magnetic sensor analog data values into digital values using an analog-to-digital converter;
(303) storing the converted sensor data in an internal register of the microprocessor; and
(309) generating a timer interrupt in response due to the output period set in the internal timer, in response thereto transmitting the sensor data and the calculated azimuth data to an external system through a serial communication and displaying the sensor data and the calculated azimuth data on an LCD module.

**Patentansprüche**

1. Vorrichtung zum Berechnen eines Azimutwinkels, die Folgendes umfasst:

einen Zweiachsen-Erdmagnetsensor (101) zum Erzeugen erster und zweiter Senkrechtachsen-Erdmagnetsensordaten; und
einen Zweiachsen-Neigungswinkelmesser (102) zum Berechnen eines Rollwinkels □ und eines Nickwinkels □ ;

**dadurch gekennzeichnet, dass** die Vorrichtung des Weiteren Folgendes umfasst:

ein Mittel (104) zum Erzeugen von Erdmagnetdaten einer virtuellen Z-Achse unter Verwendung der ersten und zweiten Senkrechtachsen-Erdmagnetsezisordaten und der Roll- und Nickwinkel und der Stärke des Erdmagnetfeldes $Z_h$, dergestalt, dass Dreiachsen-Erdnnagnetdaten die Zweiachsen-Erdmagnetsensordaten zuzüglich der errechneten Einachs-Erdmagnetdaten einer virtuellen Z-Achse umfassen;
ein Mittel (105) zum Ausführen einer Koordinatenkonversion der ersten und zweiten Senkrechtachsen-Erdmagnetsensordaten und der Erdmagnetdaten einer virtuellen Z-Achse in ein horizontales Koordinatensystem; und
ein Mittel (106) zum Berechnen des Azimuts aus den koordinatenkonvertierten Werten der ersten und zweiten Senkrechtachsen-Magnetdaten.

2. Vorrichtung nach Anspruch 1, wobei das Ausführen der Koordinatenkonversion das Verwenden der Koordinatenkonversionsmatrix oder eines Äquivalents einer solchen Koordinatenkonversionsmatrix umfasst:

$$C_i^l = \begin{bmatrix} \cos\theta & \sin\theta\sin\phi & \sin\theta\cos\phi \\ 0 & \cos\phi & -\sin\phi \\ -\sin\theta & \cos\theta\sin\phi & \cos\theta\cos\phi \end{bmatrix}$$

3. Vorrichtung nach Anspruch 1 oder 2, wobei der Zweiachsen-Erdmagnetsensor. (101) dafür konfiguriert ist, an einer Vorrichtung montiert zu werden, die Azimutinformationen benötigt, um eine Stärke eines Erdmagnetfeldes entsprechend den Azimutinformationen zu messen, wenn sich die Vorrichtung bewegt, wobei die Vorrichtung des Weiteren einen Analog-Digital (A/D)-Wandler (203) zum Umwandeln der Magnetsensordaten in digitale Werte umfasst, wobei das Mittel zum Berechnen einen Mikroprozessor (204) umfasst, und wobei die Vorrichtung des Weiteren eine serielle Kommunikationsschnittstelle (206) zum Senden der durch den Mikroprozessor verarbeiteten Daten und ein LCD (205)-Modul zum Anzeigen der durch den Mikroprozessor berechneten Azimutinformationen umfasst.

4. Verfahren zum Berechnen eines Azimutwinkels, das Folgendes umfasst:

   Erzeugen erster und zweiter Senkrechtachsen-Erdmagnetsensordaten; und
   (304) Gewinnen von Neigungswinkelmessdaten, die einen Rollwinkel □und einen Nick winkel □umfassen;

   **dadurch gekennzeichnet, dass** das Verfahren des Weiteren Folgendes umfasst:

   (306) Erzeugen von Erdmagnetdaten einer virtuellen Z-Achse unter Verwendung der ersten und zweiten Senkrechtachsen-Erdmagnetsensordaten und der Roll- und Nickwinkel und der Stärke des Erdmagnetfeldes $Z_h$, um **dadurch** Dreiachsen-Erdmagnetdäten abzuleiten, welche die Zweiachsen-Erdmagnetsensordaten zuzüglich der -errechneten Einachs-Erdmagnetdateri einer virtuellen Z-Achse umfassen;
   (307) Ausführen einer Koordinatenkonversion der Dreiachsen-Erdmagnetdaten in ein horizontales Kaordinatensystem; und
   (308) Berechnen des Azimutwinkels unter Verwendung der koordinatenkonvertierten Werte der ersten und zweiten. Senkrechtachsen-Erdmagnetsensordaten.

5. Verfahren nach Anspruch 4, wobei das Verfahren des Weiteren das Aufstellen einer Koordinatenkonversionsmatrix umfasst, wobei die Koordinatenkonversionsmatrix Folgendes umfasst:

$$C_i^l = \begin{bmatrix} \cos\theta & \sin\theta\sin\phi & \sin\theta\cos\phi \\ 0 & \cos\phi & -\sin\phi \\ -\sin\theta & \cos\theta\sin\phi & \cos\theta\cos\phi \end{bmatrix}$$

   oder ein Äquivalent dessen;
   und wobei das Ausführen einer. Koordinatenkonversion das Verwenden der Koordinatenkonversionsmatrix oder eines Äquivalents der Koordinatenkonversionsmatrix umfasst.

6. Verfahren nach Anspruch 4 oder 5, wobei ein Algorithmus zum Erzeugen der Erdmagnetdaten einer virtuellen Z-Achse Folgendes umfasst:

   einen ersten Schritt des experimentellen Messens einer Stärke eines Erdmagnetfeldes, das gemessen wird, wenn eine Messachse des Erdmagnetsensors in eine vertikale Abwärtsrichtung der Erde weist,
   einen zweiten Schritt des Berechnens der Lage unter Verwendung eines Ausgangssignals des Neigungswinkelmessers;
   einen dritten Schritt des Messens der Stärke des Erdmagnetfeldes, das in der X-Achsen- und der Y-Achsen-Richtung eines Sensormoduls unter Verwendung des Zweiachsen-Erdmagnetsensors; und

**EP 1 388 727 B1**

einen vierten Schritt des Erzeugens der Erdmagnetdaten einer virtuellen Z-Achse unter Verwendung der errechneten Lage und eines Ausgabewertes des Zweiachsen-Erdmagnetsensors.

7. Verfahren nach Anspruch 4, 5 oder 6, das des Weiteren folgende Schritte umfasst:

(301) Einstellen eines Datenausgabezeitraums unter Verwendung eines internen Zeitgebers, der auf einem Mikrocomputer montiert ist;
(302) Konvertieren der erzeugten analogen Senkrechtachsen-Erdmagnetsensordatenwerte in digitale Datenwerte unter Verwendung eines Analog-Digital-Wandlers;
(303) Speichern der konvertierten Sensordaten in einem internen Register des Mikroprozessors; und
(309) Erzeugen einer Zeitgeberunterbrechung in Reaktion auf den in dem internen Zeitgeber eingestellten Ausgabezeitraum, in Reaktion darauf Senden der Sensordaten und der errechneten Azimutdaten an' ein externes System über eine serielle Kommunikation und Anzeigen der Sensordaten und der errechneten Azimutdaten auf einem LCP-Modul.

**Revendications**

1. Appareil de calcul d'un angle d'azimut, comprenant :

un capteur magnétique terrestre à deux axes (101) destiné à générer des premières et des secondes données de capteur magnétique à axe perpendiculaire ; et
un inclinomètre à deux axes (102) destiné à calculer un angle de roulis $\phi$ et un angle de tangage $\theta$ ;

**caractérisé en ce que** l'appareil comprend en outre :

un moyen (104) destiné à générer des données magnétiques terrestres d'axe Z virtuel en utilisant les premières et les secondes données de capteur magnétique terrestre à axe perpendiculaire et les angles de roulis et de tangage et l'intensité du champ magnétique terrestre Zh, de telle sorte que des données magnétiques terrestres à trois axes comprennent les données de capteur magnétique terrestre à deux axes plus les données magnétiques terrestres d'axe Z virtuel calculées ;
un moyen (105) destiné à effectuer une conversion de coordonnées des premières et des secondes données de capteur magnétique terrestre à axe perpendiculaire et des données magnétiques terrestres d'axe Z virtuel en un système de coordonnées horizontal ; et
un moyen (106) destiné à calculer un azimut à partir des valeurs converties de coordonnées des premières et des secondes données magnétiques à axe perpendiculaire.

2. Appareil selon la revendication 1, dans lequel la réalisation de la conversion de coordonnées comprend l'utilisation de la matrice de conversion de coordonnées ou d'un équivalent de celle-ci :

$$C_b^h = \begin{bmatrix} \cos\theta & \sin\theta\sin\phi & \sin\theta\cos\phi \\ 0 & \cos\phi & -\sin\phi \\ -\sin\theta & \cos\theta\sin\phi & \cos\theta\cos\phi \end{bmatrix}$$

3. Appareil selon la revendication 1 ou 2, dans lequel le capteur magnétique terrestre à deux axes (101) est destiné à être monté sur un dispositif qui nécessite des informations d'azimut, afin de mesurer une intensité d'un champ magnétique terrestre selon les informations d'azimut si le dispositif se déplace,
dans lequel l'appareil comprend en outre un convertisseur analogique/numérique (A/N) (203) destiné à convertir les données de capteur magnétique en valeurs numériques,
dans lequel le moyen de calcul comprend un microprocesseur (204), et
dans lequel l'appareil comprend en outre une interface de communication série (206) destinée à transmettre les données traitées par le microprocesseur et un module LCD (205) destiné à afficher les informations d'azimut calculées par le microprocesseur.

4. Procédé de calcul d'un angle d'azimut, comprenant :

9

la génération de premières et de secondes données de capteur magnétique terrestre à axe perpendiculaire ; et
(304) l'obtention de données d'inclinomètre comprenant un angle de roulis $\phi$ et un angle de tangage $\theta$,

**caractérisé en ce que** le procédé comprend en outre :

(306) la génération de données magnétiques terrestres à axe Z virtuel en utilisant les premières et les secondes données de capteur magnétique terrestre à axe perpendiculaire et les angles de roulis et de tangage et l'intensité du champ magnétique terrestre Zh, afin de dériver ainsi des données magnétiques terrestres à trois axes comprenant les données de capteur magnétique terrestre à deux axes plus les données magnétiques terrestres à axe Z virtuel calculées ;
(307) la réalisation d'une conversion de coordonnées des données magnétiques terrestres à trois axes en un système de coordonnées horizontal ; et
(308) le calcul de l'angle d'azimut en utilisant les valeurs converties de coordonnées des premières et des secondes données de capteur magnétique terrestre à axe perpendiculaire.

5. Procédé selon la revendication 4, dans lequel le procédé comprend en outre l'obtention d'une matrice de conversion de coordonnées, la matrice de conversion de coordonnées comprenant

$$C_b^h = \begin{bmatrix} \cos\theta & \sin\theta\sin\phi & \sin\theta\cos\phi \\ 0 & \cos\phi & -\sin\phi \\ -\sin\theta & \cos\theta\sin\phi & \cos\theta\cos\phi \end{bmatrix}$$

ou un équivalent de celle-ci,
et dans lequel la réalisation de la conversion de coordonnées comprend l'utilisation de la matrice de conversion de coordonnées ou d'un équivalent de celle-ci.

6. Procédé selon la revendication 4 ou 5, dans lequel un algorithme de génération des données magnétiques terrestres à axe Z virtuel comprend :

une première étape de mesure par expérience d'une intensité d'un champ magnétique terrestre mesurée lorsqu'un axe de mesure du capteur magnétique terrestre pointe vers une direction descendante verticale de la terre ;
une seconde étape de calcul de l'altitude en utilisant une sortie de l'inclinomètre ;
une troisième étape de mesure de l'intensité du champ magnétique terrestre détecté dans les directions d'axe X et d'axe Y d'un module de capteur en utilisant le capteur magnétique terrestre à deux axes ; et
une quatrième étape de génération des données magnétiques terrestres à axe Z virtuel en utilisant l'altitude calculée et une valeur de sortie du capteur magnétique terrestre à deux axes.

7. Procédé selon la revendication 4, 5 ou 6, comprenant en outre les étapes consistant à :

(301) définir une période de sortie de données en utilisant une minuterie interne montée sur un micro-ordinateur,
(302) convertir les valeurs des données analogiques du capteur magnétique terrestre à axe perpendiculaire en valeurs numériques en utilisant un convertisseur analogique/numérique ;
(303) stocker les données de capteur converties dans un registre interne du microprocesseur ; et
(309) générer une interruption de minuterie en réponse, en raison de la période de sortie définie dans la minuterie interne, et, en réponse à celle-ci, transmettre les données de capteur et les données d'azimut calculées à un système externe par le biais d'une communication série, et afficher les données de capteur et les données d'azimut calculées sur un module LCD.

# FIG. 1

101

TWO-AXIS
EARTH MAGNETIC
SENSOR

104

VIRTUAL Z-AXIS
EARTH MAGNETIC
DATA GENERATION

105

EARTH MAGNETIC
DATA COORDINATE
CONVERSION

INCLINOMETER

ATTITUDE
CONVERSION
MATRIX

AZIMUTH ANGLE
CALCULATION

102

103

106

# FIG. 2

201 — TWO-AXIS EARTH MAGNETIC SENSOR

INCLINOMETER — 202

SIGNAL CONDITIONING UNIT — 203

MICROPROCESSOR — 204

205 — LCD MODULE

SERIAL COMMUNICATION — 206

# FIG. 3

START

301 — SET OUTPUT PERIOD OF SENSOR DATA USING INTERNAL TIMER

302 — GENERATE ADC CONTROL SIGNAL

303 — STORE ADC OUTPUT DATA IN INTERNAL REGISTER

304 — CALCULATE ATTITUDE USING INCLINOMETER DATA

305 — CALCULATE COORDINATE CONVERSION MATRIX

306 — GENERATE VIRTUAL Z-AXIS EARTH MAGNETIC DATA

2

2

307 — CALCULATE EARTH MAGNETIC DATA IN HORIZONTAL COORDINATE SYSTEM USING EARTH MAGNETIC SENSOR DATA AND CALCULATED COORDINATE CONVERSION MATRIX

308 — CALCULATE AZIMUTH

309 — TIMER INTERRUPT

NO

YES

310 — TRANSMIT SENSOR DATA AND AZIMUTH INFORMATION TO EXTERNAL SYSTEM USING SERIAL COMMUNICATION

311 — OUTPUT CALCULATED AZIMUTH INFORMATION TO LCD MODULE

# FIG. 4

# FIG. 5

# FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4414753 A